# EUROPEAN PATENT SPECIFICATION

(11) **EP 0 715 398 B1**
(45) Date of publication and mention of the grant of the patent: **15.03.2000**
(21) Application number: 95118662.6
(22) Date of filing: 27.11.1995
(51) Int. Cl.: H02K 7/18, F02B 67/04

(54) **Generator mounting structure for engine**
Einbaueinrichtung für eine Lichtmaschine in einem Motor
Structure pour le montage d'un générateur sur un moteur à combustion

(30) Priority: 28.11.1994 JP 29321294
(43) Date of publication of application: 05.06.1996
(73) Proprietor: HONDA GIKEN KOGYO KABUSHIKI KAISHA, Minato-ku Tokyo (JP)
(72) Inventor: Hamauzu, Akira, c/o K.K. Honda Gijutsu Kenkyusho, Wako-shi, Saitama (JP)
(74) Representative: Liska, Horst, Dr.-Ing.

(56) References cited:
- EP-A- 0 598 697
- JP-A- 6 129 257
- US-A- 5 078 101
- PATENT ABSTRACTS OF JAPAN vol. 018, no. 432 (M-1654), 11 August 1994 & JP 06 129257 A (SUZUKI MOTOR CORP), 10 May 1994,

## Description

The present invention relates to a generator mounting structure for mounting a generator on an engine, that disposes the generator comprising a stator and a rotor in a space around one end of a crankshaft supported on the crankcase of the engine, supports the stator on the crankcase and supports the rotor on the crankshaft.

A generator mounting structure for an engine is disclosed in Japanese Patent Laid-open No. Hei 6-129257.

The generator mounting structure disclosed in Japanese Patent Laid-open No. Hei 6-129257 supports a crankshaft in a bearing fitted in a cylindrical support projecting from a crankcase, and mounts the stator of a generator on the cylindrical support with the center hole of the stator core of the stator closely receiving the cylindrical support therein.

In this conventional generator mounting structure, since the stator is mounted on the cylindrical support projecting from the crankcase with the center hole of the stator core of the stator closely receiving the cyclindrical support therein, the center hole has a comparatively large diameter and the stator is comparatively large, which impedes forming the generator in a compact construction. The cylindrical support is fitted on the outer circumference of a rim axially projecting from the crankcase in concentric relation to the crankshaft bore so that a separate machining step for finishing the outer circumference of this rim is required.

It is an object of the present invention to provide a generator mounting structure for mounting a generator on an engine which can be formed with a reduced number of working steps.

According to the invention, a generator mounting structure for mounting a generator on an engine is proposed with the features of claim 1.

Because the boss is fitted in the spigot joint in the crankshaft support hole, the finishing of the crankshaft support bore can be done in one step for fitting both the seal member and the boss therein so that the number of working steps is reduced.

In the generator mounting structure, the boss inserted in the center hole of the stator core is fitted in the crankshaft support hole to fix the stator to the crankcase. The center hole is formed in the smallest possible size so that the stator can be formed in a compact construction.

One end of the boss having the other end fitted in the center hole of the stator core of the stator is fitted in the crankshaft support bore formed in the crankcase. Therefore, the center hole of the stator core may be comparatively small, so that the stator can be formed in a comparatively small radial dimension.

Preferably the boss has a shoulder, a smaller portion on one side of the shoulder, and a larger portion on the other side of the shoulder, the smaller portion is fitted in the center hole of the stator core in a press fit so that the shoulder is in close contact with the side surface of the stator core.

The shoulder of the boss determines the depth of insertion of the smaller portion of the boss in the central bore of the stator core. The diameter of the larger portion of the boss is determined according to the diameter of the crankshaft support hole in order that the stator can be mounted on any one of a plurality of crankcases respectively having crankshaft support holes of different diameters.

Since the boss has the shoulder, the smaller portion formed on one side of the shoulder, and a larger portion formed on the other side of the shoulder, and the smaller portion of the boss is fitted in the center hole of the stator core so that the shoulder is in contact with the side surface of the stator core. Therefore, the depth of insertion of the boss in the center hole of the stator can be easily adjusted, and the stator can be attached to crankcases provided respectively with crankshaft support bores of different diameters by using bosses respectively having larger portions of different diameters corresponding to the diameters of the crankshaft support bores, respectively.

It is also preferred that a bearing is fitted in a press fit in a bearing hole continuous with the crankshaft support hole, and one end of the crankshaft is fitted in the inner ring of the bearing in a press fit.

Thus a large bearing hole can be used for fitting a ball bearing of a large load capacity and a crankshaft of a large diameter can be supported in the ball bearing of a large load capacity, and work for fitting the ball bearing in the bearing hole and fitting the crank shaft in the ball bearing using jigs can be easily accomplished.

Since the outer ring of the bearing is fitted in the bearing hole continuous with the crankshaft support bore in a press fit, and the crankshaft is fitted in the inner ring of the bearing in a press fit, the ball bearing may be of a large load capacity and the crankshaft may be of a large diameter, which improves the durability and reduces noise, and facilitates work for fitting the ball bearing in the bearing hole and fitting the crankshaft in the ball bearing with jigs.

A preferred embodiment of the present invention will be described hereinafter with reference to the accompanying drawings, in which:

Fig. 1 is a general side view of a motorcycle.

Fig. 2 is a side view of a power unit.

Fig. 3 is a sectional view taken on line 3-3 in Fig. 2.

Fig. 4 is a sectional view taken on line 4-4 in Fig. 3.

Fig. 5 is a sectional view taken on the line 5-5 in Fig. 2.

Fig. 6 is a view taken in the direction of the arrows along the line 6-6 in Fig. 3.

Fig. 7 is a sectional view taken on the line 7-7 in Fig. 6.

Fig. 8 is an enlarged view of a portion indicated at 8 in Fig. 7.

Fig. 9 is a plan view of a right half case and a left half case.

Fig. 10 is a view taken in the direction of the arrows along the line 10-10 in Fig. 9.

Fig. 11 is a view taken in the direction of the arrows along the line 11-11 in Fig. 6.

Fig. 12 is a sectional view taken on the line 12-12 in Fig. 6.

Fig. 13 is an enlarged view of a portion in Fig. 6, in which a second rubber damper is omitted.

Fig. 14 is a sectional view taken on the line 14-14 in Fig. 13.

Fig. 15 is an enlarged view of a portion in Fig. 6, in which a first rubber damper is omitted.

Fig. 16 is a sectional view taken on the line 16-16 in Fig. 15.

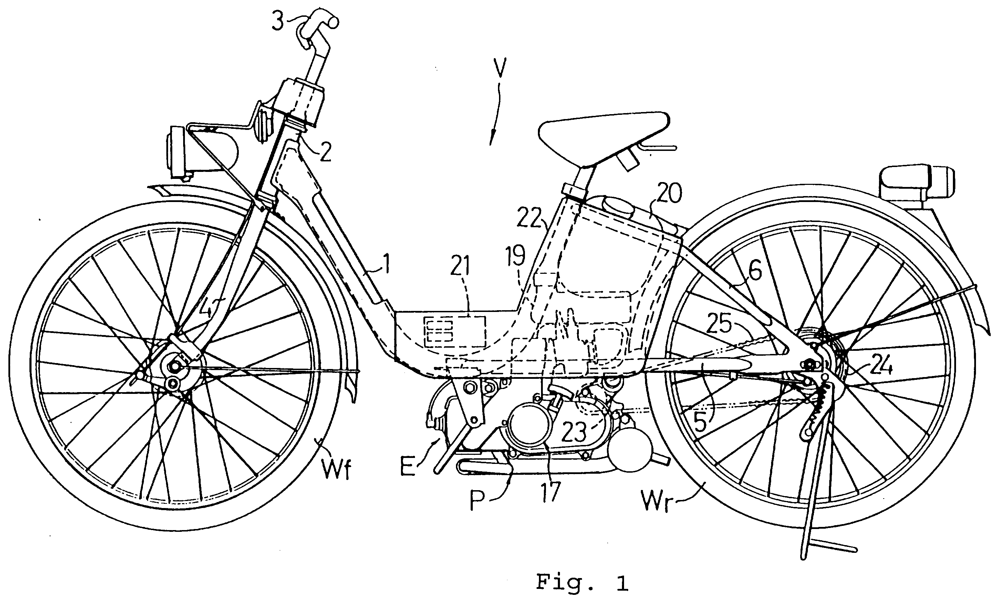

Referring to Fig. 1, a motorcycle V has a main frame 1 having a shape resembling the letter U in a side view. A head pipe 2 attached to the front end of the main frame 1 has an upper end attached to a handlebar 3 and a lower end supporting for steering a front fork supporting a front wheel Wf on an axle at its lower end. The rear end of a lower rear fork 5 extended backward from the lower end of the main frame 1, and the rear end of an upper rear fork 6 extended backward from the rear end of the main frame 1 are joined together, and a rear wheel Wr to be driven by a power unit P is supported on an axle at the joint of the respective rear ends of the lower rear fork 5 and the upper rear fork 6.

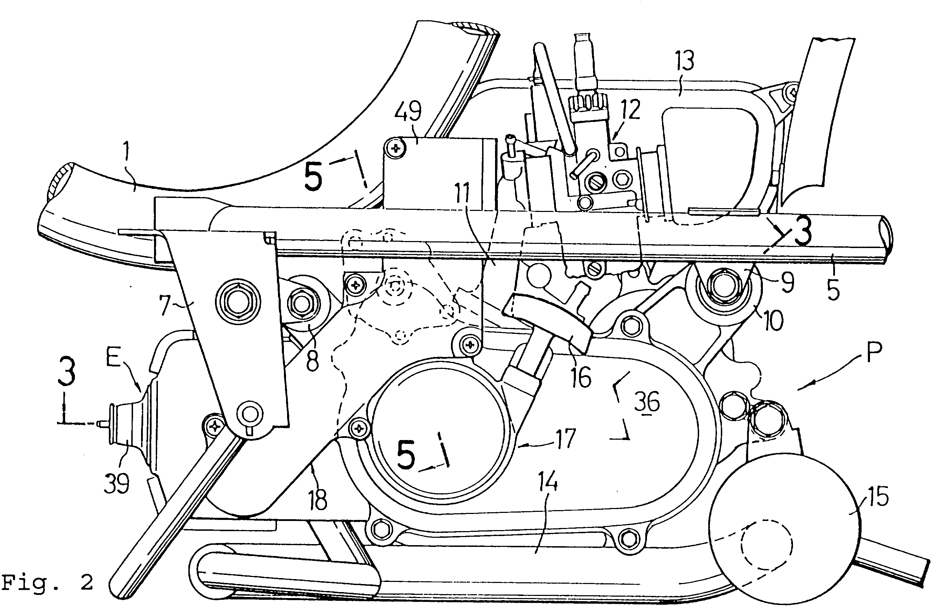

As is apparent from the observation of both Figs. 1 and 2, the power unit P provided with a two-cycle single-cylinder engine E has a front end supported through a rubber bush 8 on a bracket 7 attached to the front portion of the lower rear fork 5, and a rear end supported through a rubber bush 10 on a bracket 9 fixed to the middle portion of the lower rear form 5.

A carburetor 12 is connected to the upper end of an intake pipe 11 extended upward from the upper surface of the power unit P, and an air cleaner 13 is connected to the right side surface of the carburetor 12. An exhaust pipe 14 is extended backward from the lower surface of the power unit P and is connected to a muffler 15 suspended from the rear end of the power unit P. A recoil starter 17 having a starting grip 16, and a cooling air discharge duct 18 are arranged on the left side surface of the power unit P.

An oil tank 19 and a fuel tank 20 are disposed above the rear portion of the power unit P, and a battery 21 is disposed above the front portion of the power unit P. The oil tank 19, the fuel tank 20 and the battery 21 are covered with a cover 22 supported on the main frame 1, the lower rear fork 5 and the upper rear fork 6.

An endless chain 25 is extended between a driving sprocket 23 disposed on the right side surface of the power unit P, and a driven sprocket 24 mounted on the rear axle supporting the rear wheel Wr to transmit the driving force of the power unit P to the rear wheel Wr.

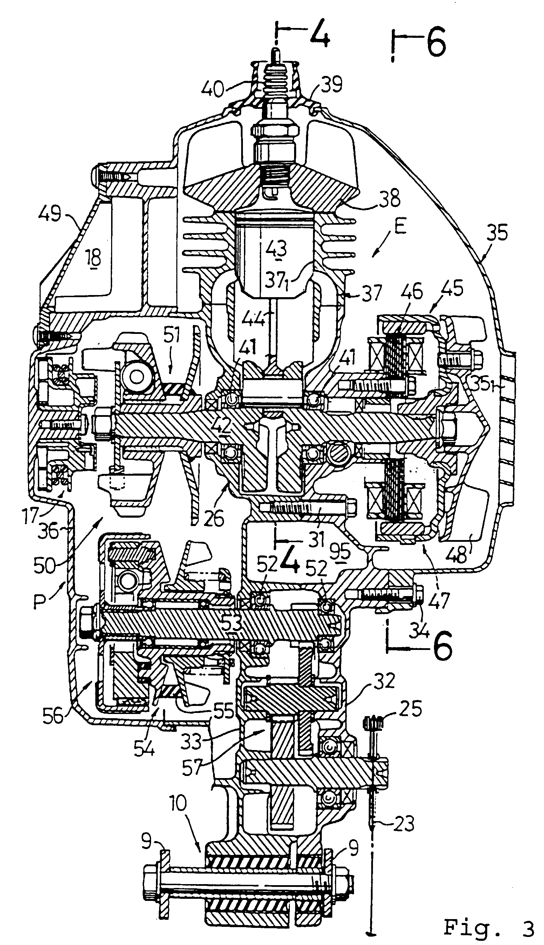

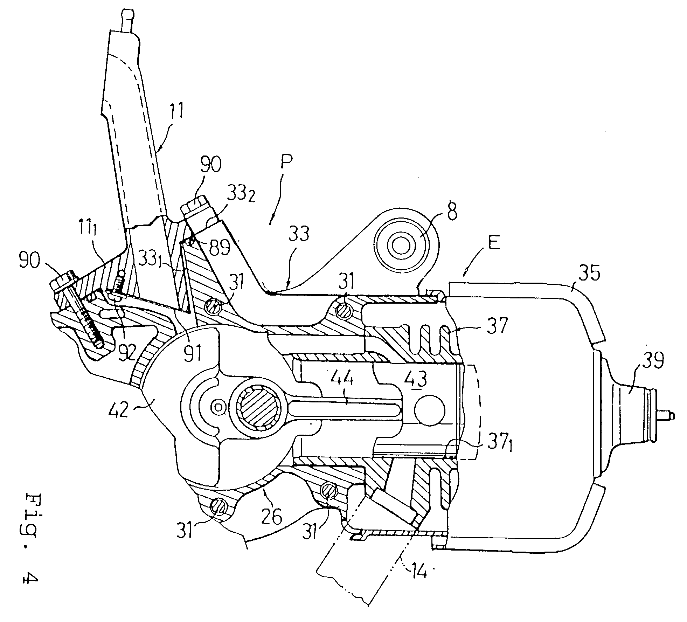

The construction of the power unit P will be described hereinafter with reference to Figs. 3 and 4.

The power unit P has a right half case 32 and a left half case 33 joined together with bolts 31. A right cover 35 is fastened to the right side surface of the right half case 32 with bolts 34, and a left cover 36 is fastened to the left side surface of the left half case 33 with bolts, not shown. The respective front portions of the right half case 32 and the left half case 33 form the crankcase of the engine E. A cylinder block 37 is fastened to the front portion of the crankcase and a cylinder head 38 is joined to the cylinder block 37. The cylinder block 37 and the cylinder head 38 are covered with the right cover 35 and the left cover 36. The tip of a spark plug 40 is exposed in a cap 39 held between the front portions of the mating surfaces of the right cover 35 and the left cover 36.

A crankshaft 42 is supported in a pair of ball bearings 41 on the right half case 32 and the left half case 33, a piston 43 is slidably fitted in a cylinder 37₁ formed in the cylinder block 37, and a connecting rod 44 connects the piston 43 to the crankshaft 42. A generator 45 disposed in a space around the right end of the crankshaft 42 comprises a stator 46 supported on the right half case 32, and a rotor 47 supported on the crankshaft 42. A cooling fan 48 for taking cooling air through a cooling air inlet 35₁ formed in the right cover 35 into a space covered with the right cover 35 is attached to the right end surface of the rotor 47. A duct cover 49 forming the cooling air discharge duct 18 in combination with the left cover 36 is fastened to the outer surface of the left cover 36.

The left half case 33 and the left cover 36 form a transmission case, and a belt-drive variable-speed transmission 50 is contained in the transmission case. The belt-drive variable-speed transmission 50 comprises an input shaft, i.e., a left portion of the crankshaft 42, a driving pulley 51 mounted on the input shaft, an output shaft 53 supported in a pair of ball bearings 52 on the right half case 32 and the left half case 33, a driven pulley 54 supported on the left end of the output shaft 53 and an endless belt 55 extended between the driving pulley 51 and the driven pulley 54.

The recoil starter 17 is placed on the inner surface of the left cover 36 opposite to the left end of the crankshaft 42, and an automatic centrifugal clutch 56 for transmitting the rotation of the driven pulley 54 to the output shaft 53 is mounted on the left end of the output shaft 53. A reduction gear train 57 is disposed in the rear portion of a space defined by the right half case 32 and the left half case 33. The reduction gear train 57 reduces the input speed, i.e., the rotating speed of the output shaft 53, to a lower speed and transmits the lower speed to the driving sprocket 23.

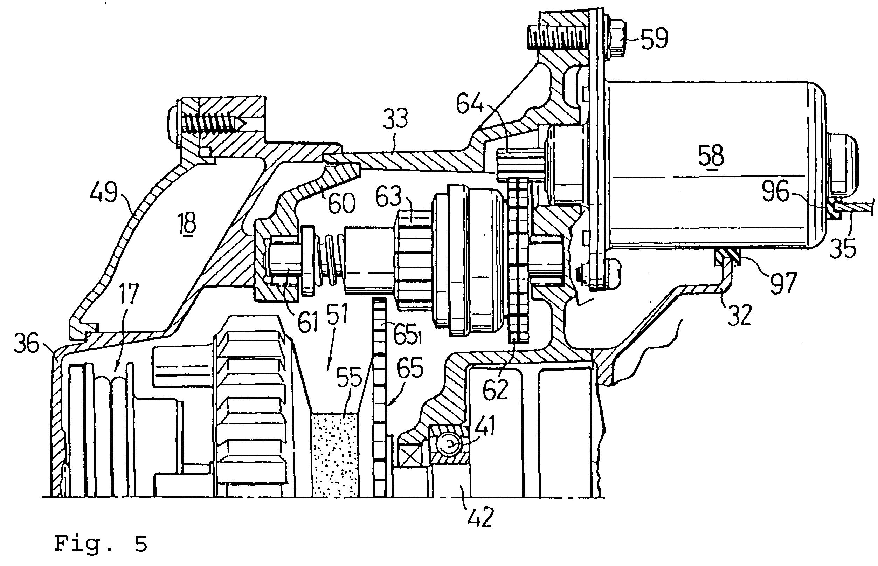

As best shown in Fig. 5, a starting motor 58 is fastened to the end surface of the left half case 33 on a parting plane Pc between the right half case 32 and the left half case 33 with bolts 59. A starting shaft 61 is supported on the left half case 33 and a bearing bracket 60, and a driven gear 62 and a plunging pinion 63 mounted on the starting shaft 61. A driving pinion 64 mounted on the output shaft of the starting motor 58 is in engagement with the driven gear 62, and the plunging pinion 63 is brought into engagement with a starting gear 65₁ formed in the outer circumference of the axially fixed part 65 of the driving pulley 51 for engine starting operation. When the starting motor 58 is driven, the starting shaft 61 is rotated through the driving pinion 64 and the driven gear 62, the pinion 63 is shifted to the left, as viewed in Fig. 5, so as to engage with the starting gear 65₁ to rotate the driving pulley 51 and, consequently, the crankshaft 42 is rotated to start the engine E.

Since the starting motor 58 is supported on the end surface of the left half case 33 on the parting place Pc as mentioned above, any support surface need not be formed by machining, which reduces the processing cost.

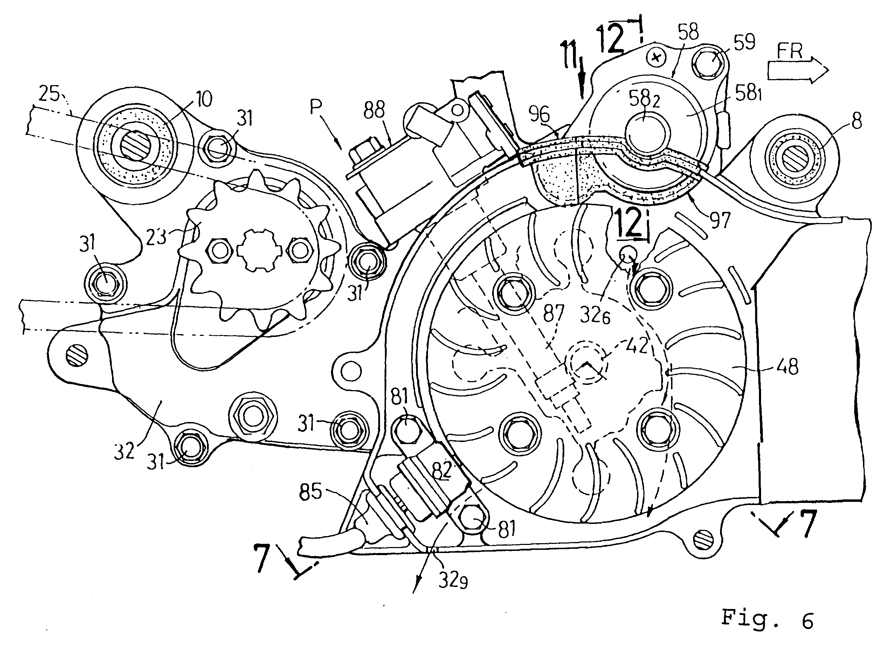

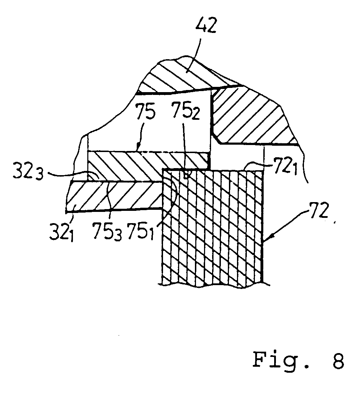

The construction of the generator 45 will be described hereinafter with reference to Figs. 6 to 8.

The right half case 32 is provided integrally with a substantially cylindrical crankshaft support part 32₁ to support the crankshaft 42 at its right end. The crankshaft support part 32₁ has a crankshaft support bore 32₂ continuous with a bearing hole 32₃. A ball bearing 41 is fitted in the bearing hole 32₃ in a press fit to support the crankshaft 42, and an annular space between the outer circumference of the crankshaft 42 and the crankshaft support bore 32₂ is sealed with a sealing member 71.

The stator 46 of the generator 45 comprises a stator core 72 formed by uniting superposed thin magnetic sheets, bobbins 73 put on the stator core 72, coils 74 wound on the bobbins 73, and a boss 75 fixedly fitted in the core of the stator core 72 in a press fit.

The boss 75 has a shoulder 75₁, a smaller portion 75₂ on one side of the shoulder 75₁, and a larger portion 75₃ on the other side of the shoulder 75₁. The smaller portion 75₂ of the boss 75 is fitted in the center hole 72₁ of the stator core 72 in a press fit, and the larger portion 75₃ of the boss 75 is fitted in the crankshaft support hole 32₂ of the right half case 32. The larger portion 75₃ of the boss 75 is fitted in the crankshaft support hole 32₂ closely to locate the stator core 72 axially and radially, and then the stator 46 is fastened to the crankshaft support part 32₁ with bolts 76.

The rotor 47 of the generator 45 comprises a rotor body 79 keyed to the end portion of the crankshaft 42 with a key 77 and fixed in place with a nut 78, and a plurality of permanent magnets 80 fixed to the inner circumference of the rotor body 79 opposite to the coils 74. A cooling fan 48 is fastened to the side surface of the rotor body 79 with bolts 81.

An engine speed detector 82 is held on the right half case 32 to detect engine speed through the detection of the rotating speed of the rotor 47 at a position corresponding to protrusions 79₁ formed on the outer circumference of the rotor body 79 at predetermined angular intervals. A cord 83 connected to the coils 74 and a cord 84 connected to the engine speed detector 82 are tied together and are extended outside through a grommet 85 held between the mating surfaces of the right half case 32 and the right cover 35. Portions of the cords 83 and 84 extending outside the right cover 35 are held by a cord holding part 32₄ formed on the right half case 32 and a cord holding part 35₂ formed on the right cover 35 to prevent the cords 83 and 84 from shaking.

Since the smaller portion 75₂ of the boss 75 is pressed in the center hole 72₁ of the stator core 72, and the larger portion 75₃ of the boss 75 is fitted in the crankshaft support bore 32₂ of the right half case 32, the diameter of the center hole 72₁ of the stator core 72 may be smaller than that of a hole corresponding to the outside diameter of the crankshaft support part 32₁. Therefore, the radial dimension of the stator core 72 is comparatively small.

Since the crankshaft support bore 32₂ may be formed in a sufficiently large diameter even if the diameter of the center hole 72₁ of the stator core 72 is comparatively small, a jig for pressing the outer ring of the ball bearing 41 for supporting the crankshaft 42 in the bearing hole 32₃, and a jig for pressing the crankshaft 42 in the inner ring of the ball bearing 41 can be easily inserted in the crankshaft support bore 32₂, which improves the efficiency of assembling work. It is also possible to increase the diameter of the crankshaft 42 and to use a ball bearing having an increased load capacity as the ball bearing 41 to suppress noise generation and to improve durability.

Since the crankshaft support bore 32₂ of the right half case 32 is finished by machining so as to receive the sealing member 71 in a press fit, the crankshaft support bore 32₂ does not need further special machining to receive the larger portion 75₃ of the boss 75 therein. Since the crankshaft support bore 32₂ and the bearing hole 32₃ are coaxial and can be machined from the same direction, the crankshaft support bore 32₂ and the bearing hole 32₃ can be accurately finished in a high concentricity. Since the crankshaft support bore 32₂ and the bearing hole 32₃ can be formed by a single mold when casting the right half case 32, the crankshaft support bore 32₂ and the bearing hole 32₃ can be accurately cast.

Since the boss 75 has the shoulder 75₁, the length of the smaller portion 75₂ to be inserted in the center hole 72₁ of the stator core 72 can be easily adjusted. The stator 46 can be applied to engines E of different types having crankshaft support bores 32₂ of different diameters by using the stator 46 in combination with bosses having larger portions 75₃ of diameters respectively corresponding to those of the crankshaft support bores 32₂.

As shown in Fig. 6, an oil pump 88 is attached to the upper wall of the right half case 32, and the driving shaft 87 of the oil pump 88 is driven by the crankshaft 42.

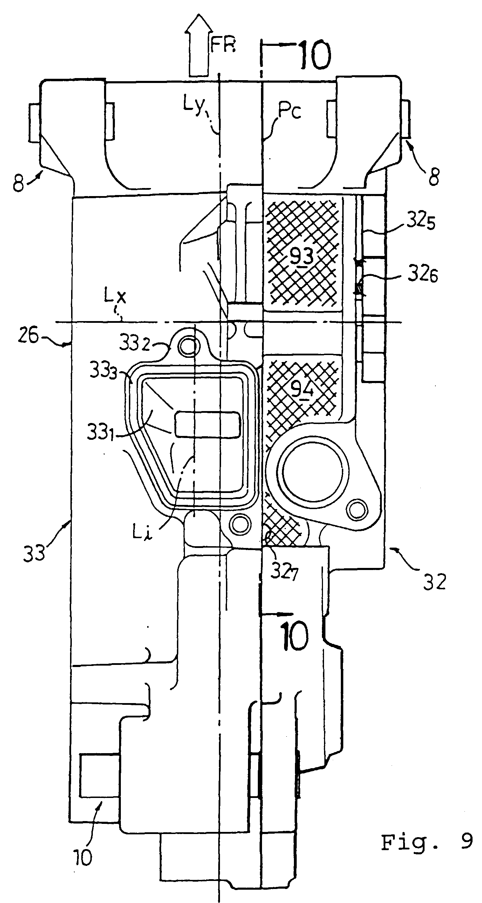

The intake system of the engine E will be described hereinafter with reference to Figs. 4 and 9.

As shown in Fig. 9, the parting plane Pc between the right half case 32 and the left half case 33 extends longitudinally, is perpendicular to the axis Lx of the crankshaft 42, and is biased to the right with respect to the axis Ly of the cylinder. An intake opening 33₁ is formed in the left half case 33 along the parting plane Pc so as to communicate with the interior of the crankcase 26. A groove 33₃ for receiving an O ring 89 therein is formed in an intake pipe seat 33₂ surrounding the intake opening 33₁. The center axis Li of the intake opening 33₁ is biased to the left with respect to the axis Ly of the cylinder.

As shown in Fig. 4, the O ring 89 is fitted in the groove 33₃, a flange 11₁ connected to an intake pipe 11 is seated on the intake pipe seat 33₂, and the flange 11₁ is fastened to the left half case 33 with two bolts 90. A reed valve 91 is fixed to the lower surface of the flange 11₁ with a bolt 92 so as to be contiguous with the lower end of the intake pipe 11.

Since the intake opening 33₁ is formed in the left half case 33 so as not to extend across the parting plane Pc between the right half case 32 and the left half case 33, the intake pipe seat 33₂ is formed only on the left half case 33. Therefore, the flange 11₁ of the intake pipe 11 is joined only to the left half case 33 provided with the intake opening 33₁, the cost for forming the joining surface is reduced, the joining surface can be satisfactorily sealed, and there is no possibility that the O ring 89 fitted in the groove 33₃ is damaged by the edges of the right half case 32 and the left half case 33 extending along the parting plane Pc.

Since the parting plane Pc between the right half case 32 and the left half case 33 is biased to the right with respect to the longitudinal axis, the intake opening 33₁ of the left half case 33 can be formed near the axis Ly of the cylinder so that the air-fuel mixture intake efficiency may not be reduced. Since the center axis Li of the intake opening 33₁ is biased to the left with respect to the axis Ly of the cylinder, the intake opening 33₁ can be formed in a sufficiently large area without overlapping the parting plane Pc so that the output of the engine may not be reduced.

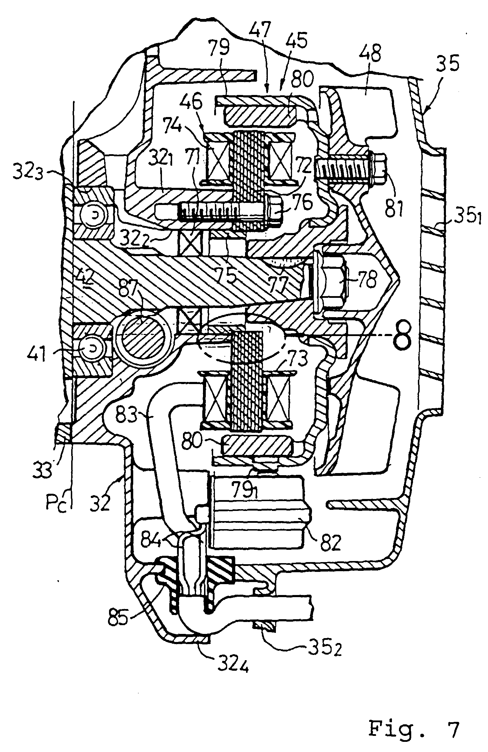

Since the parting plane Pc between the right half case 32 and the left half case 33 is biased to the right with respect to the longitudinal axis, the bearing hole 32₃ in which the ball bearing 41 supporting the crankshaft 42 at its right end is fitted in a press fit can be formed near the parting plate Pc as shown in Fig. 7. When the bearing hole 32₃ is formed so that the left end face of the ball bearing 41 fitted in the bearing hole 32₃ is flush with the parting plane Pc, the ball bearing 41 can be pressed in the bearing hole 32₃ with a simple jig and the variation of the depth of insertion of the ball bearing 41 in the bearing hole 32₃ can be reduced.

A draining structure for draining water through the upper surface of the right half case 32 will be described hereinafter with reference to Figs. 6, 9 and 10.

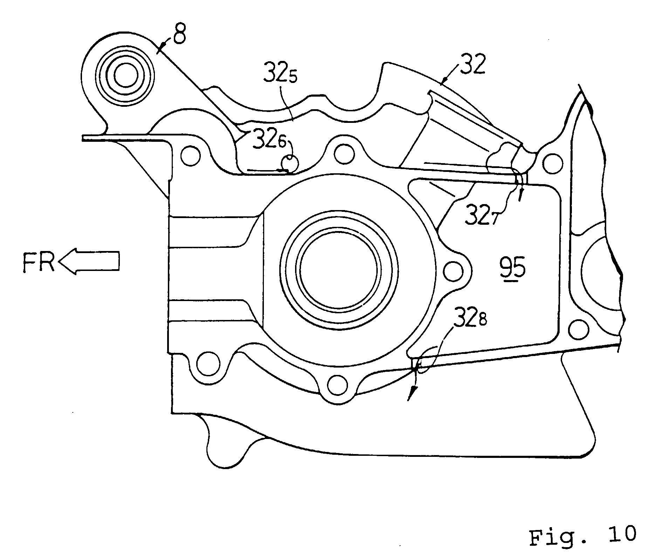

Referring to Figs. 9 and 10, a pair of depressions 93 and 94, i.e., shaded areas in Fig. 9, surrounded by side walls are formed in the upper wall of the right half case 32.

A circular drain hole 32₆ is formed in a wall 32₅ of the right half case 32 opposite the generator 45 and a semicircular drain hole 39₉ (Fig. 6) is formed in the end surface of the right half case 32 included in the parting plane Pc and joined to the right cover 35 to drain water staying in the front depression 93. The water staying in the front depression 93 flows through the drain hole 32₆ into a space defined by the right half case 32 and the fight cover 35 to house the generator 45 and drains outside through the drain hole 32₉ as indicated by the arrows in Fig. 6.

As shown in Figs. 3 and 10, a cavity 95 is formed under the rear depression 94 and between the right half case 32 and the left half case 33. A pair of semicircular drain holes 32₇ and 32₈ are formed one over the other in the end surface of the right half case 32 facing the parting plane Pc to drain water staying in the rear depression 94. The water staying in the rear depression 94 flows through the rear drain hole 32₇ into the cavity 95 and drains outside through the lower drain hole 32₈ as indicated by the arrows in Fig. 10.

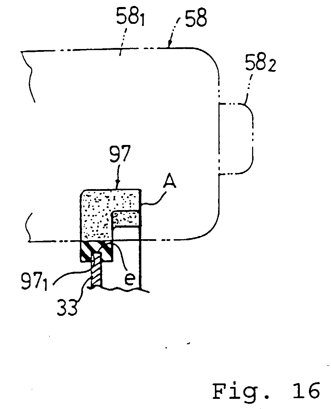

An elastic support structure for supporting the starting motor 58 will be described hereinafter with reference to Figs. 6 and 11 to 16.

The cylindrical body 58₁ and the protrusion 58₂ of the starting motor 58 fastened to the end surface of the left half case 33 included in the parting plane Pc are seated on a first rubber damper 96 and a second rubber damper 97 to support the same elastically on the right half case 32 and the right cover 35. The first rubber damper 96 and the second rubber damper 97 are in contact with each other. The relatively large first rubber damper 96 is supported on the right half case 32 and the right cover 35, and the relatively small second rubber damper 97 is supported on the right half case 32.

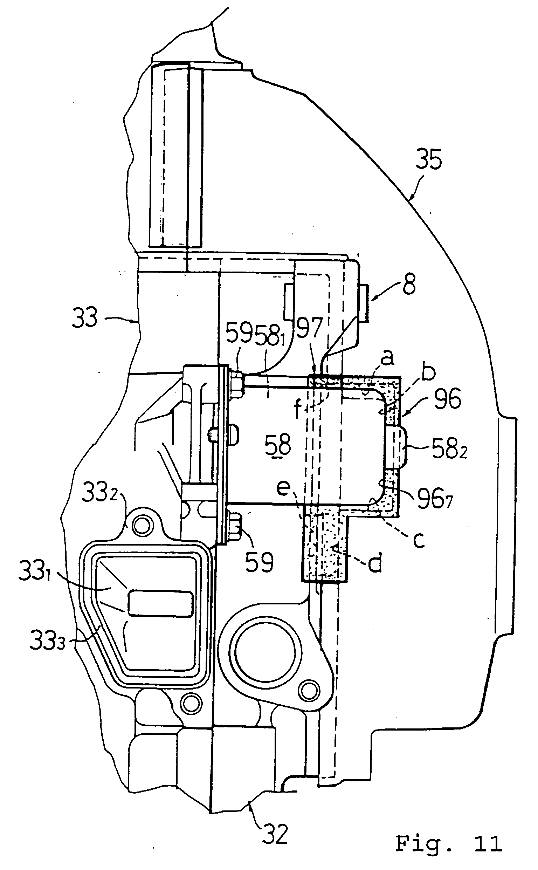

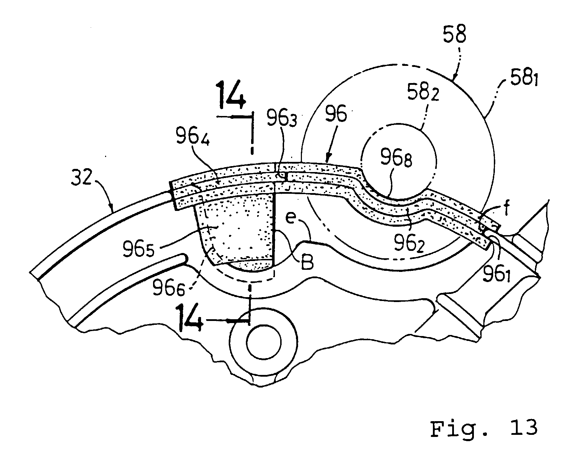

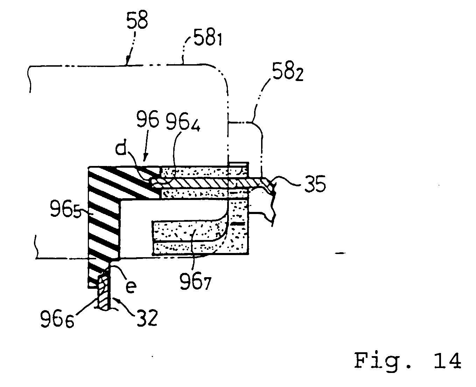

As shown in Fig. 11, a turned square U-shaped recess defined by edges a, b and c, and an edge d continuous with the edge c are formed in the joint surface of the right cover 35 to be joined to the right half case 32. Grooves 96₁, 96₂, 96₃ and 96₄ formed in the outer surface of the first rubber damper 96 are fittedto receive the edges a, b, c and d therein, respectively, as shown in Figs. 11 to 14. The rear portion of an edge e of a shape resembling the numeral 3 formed in the right half case 32 is received in a groove 96₆ formed in the lower edge of a pendulous portion 96₅ of the first rubber damper 96 extending downward from the rear end of the first rubber damper 96 as shown in Figs. 13 and 14.

The first rubber damper 96 thus supported has a turned square U-shaped holding depression 96₇ (Fig. 11), and the body 58₁ of the starting motor 58 is fitted in the holding depression 96₇. The first rubber damper 96 is provided with another U-shaped holding depression 96₈ (Fig. 13), and the protrusion 58₂ protruding the rear end of the body 58₁ of the starting motor 58 is fitted in the holding depression 96₈.

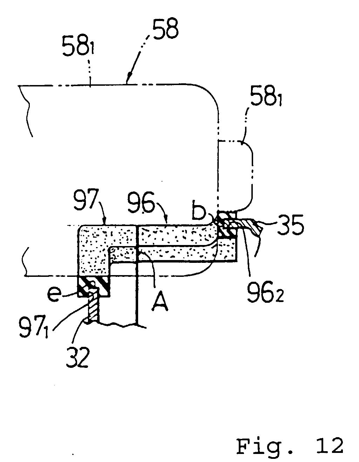

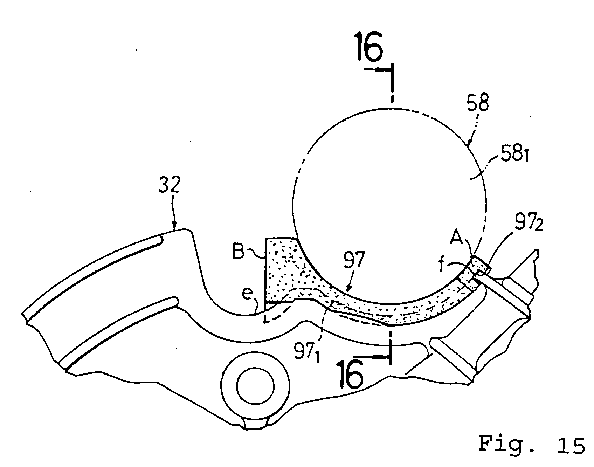

The second rubber damper 97 is provided with grooves 97₁ and 97₂ in its lower edge and front edge, respectively. A front portion of the 3-shaped edge e formed on the right half case 32 is received in the groove 97₁, and an edge f formed in the right half case 32 continuously with the edge e is received in the groove 97₂ as shown in Figs. 12, 15 and 16. The respective front ends of the first rubber damper 96 and the second rubber damper 97 abut each other on a joint plane A (Figs. 12. 15 and 16), and the respective rear ends of the same abut each other on a joint plane B (Figs. 13 and 15).

The second rubber damper 97 thus supported is provided with a U-shaped holding depression 97₃ (Fig. 15), and the lower portion of the body 58₁ of the starting motor 58 is fitted in the holding depression 97₃.

Although the present invention has been described in its preferred embodiment, many changes and variations may made therein without departing from the scope of the invention, which is defined by the appended claims.

Although the present invention has been described as applied to the two-cycle single-cylinder engine E, the present invention is applicable also to four-cycle engines and multicylinder engines.
Summarized, the present invention provides a generator mounting structure that enables the miniaturization of a generator to be incorporated into an engine.

The right end of a crankshaft 42 supported in a ball bearing 41 is inserted loosely in a crankshaft support bore 32₂ formed in a cylindrical crankshaft support part 32₁ projecting from a right half case 32 of the crankcase of an engine. A generator 45 comprises a stator 46 fastened to the crankshaft support part 32₁ wit h bolts 76 , and a rotor 47 mounted on and fastened to the end portion of the crankshaft 42 with a nut 78. One end of an boss 75 is fitted in the center hole of the stator core 72 of the stator 46 in a press fit, and the other end of the boss 75 is fitted in the crankshaft support bore 32₂ in a press fit.

## Claims

1. A generator mounting structure for mounting a generator (45) on an engine (E), that disposes the generator (45) comprising a stator (46) and a rotor (47) in a space around one end of a crankshaft (42) supported on the crankcase (26) of the engine (E), supports the stator (46) on the crankcase (26) and supports the rotor (47) on the crankshaft (42);
wherein a boss (75) inserted in a center hole (72₁) of a stator core (72) of the stator (46) is fitted in a spigot joint in a crankshaft support hole (32₂) formed in the crankcase (26),
an annular space between the outer circumference of the crankshaft (42) and the crankshaft support hole (32₂) is sealed with a sealing member (71).

2. A generator mounting structure for mounting a generator (45) on an engine (E) according to claim 1, wherein the boss (75) has a shoulder (75₁), a smaller-diameter portion (75₂) on one side of the shoulder (75₁), and a larger-diameter portion (75₃) on the other side of the shoulder (75₁), the smaller portion (75₂) is fitted in the center hole (72₁) of the stator core (72) in a press fit so that the shoulder (75₁) is in close contact with a side surface of the stator core (72).

3. A generator mounting structure for mounting a generator (45) on an engine (E) according to claim 1, wherein a bearing (41) is fitted in a press fit in a bearing hole (32₃) continuous with the crankshaft support hole (32₂), and one end of the crankshaft (42) is fitted in an inner ring of the bearing (41) in a press fit.

## Patentansprüche

1. Generatoranbringestruktur zum Anbringen eines Generators (45) an einer Maschine (E), die den einen Stator (46) und einen Rotor (47) aufweisenden Generator (45) in einem Raum, der ein Ende einer am Kurbelgehäuse (26) der Maschine (E) gelagerten Kurbelwelle (42) umgibt, anordnet, den Stator (46) an dem Kurbelgehäuse (26) hält und den Rotor (47) an der Kurbelwelle (42) hält;
wobei ein Ansatz (75), der in ein Mittelloch (72₁) eines Statorkerns (72) des Stators (46) eingesetzt ist, in einen Zentrieranschluß in einem im Kurbelgehäuse (26) gebildeten Kurbelwellentragloch (32₂) eingesetzt ist,
wobei ein Ringraum zwischen dem Außenumfang der Kurbelwelle (42) und dem Kurbelwellentragloch (32₂) mit einem Dichtelement (71) abgedichtet ist.

2. Generatoranbringestruktur zum Anbringen eines Generators (45) an einer Maschine (E) nach Anspruch 1, wobei der Ansatz (75) eine Schulter (75₁), einen Abschnitt kleineren Durchmessers (75₂) an einer Seite der Schulter (75₁) sowie einen Abschnitt größeren Durchmessers (75₃) an der anderen Seite der Schulter (75₁) aufweist, wobei der kleinere Abschnitt (75₂) im Preßsitz in das Mittelloch (72₁) des Statorkerns (72) eingesetzt ist, derart, daß die Schulter (75₁) in engem Kontakt mit einer Seitenfläche des Statorkerns (72) ist.

3. Generatoranbringestruktur zum Anbringen eines Generators (45) an einer Maschine (E) nach Anspruch 1, wobei ein Lager (41) im Preßsitz in ein Lagerloch (32₃) eingesetzt ist, das an das Kurbelwellentragloch (32₂) anschließt, und ein Ende der Kurbelwelle (42) im Preßsitz in einen Innenring des Lagers (41) eingesetzt ist.

## Revendications

1. Structure de montage d'un générateur destiné au montage d'un générateur (45) sur un moteur à combustion (E), qui dispose le générateur (45) comprenant un stator (46) et un rotor (47) dans un espace situé autour d'une extrémité d'un vilebrequin (42) supporté sur le carter moteur (26) du moteur à combustion (E), supporte le stator (46) sur le carter moteur (26) et supporte le rotor (47) sur le vilebrequin (42) ;
dans laquelle un bossage (75) introduit dans un orifice central (72₁) d'un noyau de stator (72) du stator (46) est ajusté dans une connexion par emboîtement dans un orifice de support de vilebrequin (32₂) formé dans le carter moteur (26),
un espace annulaire situé entre la circonférence extérieure du vilebrequin (42) et l'orifice de support de vilebrequin (32₂) est scellé à l'aide d'un élément d'étanchéité (71).

2. Structure de montage d'un générateur destiné au montage d'un générateur (45) sur un moteur à combustion (E) selon la revendication 1, dans laquelle le bossage (75) comporte un épaulement (75₁), une partie à plus petit diamètre (75₂) située sur un côté de l'épaulement (75₁), et une partie à plus grand diamètre (75₃) située sur l'autre côté de l'épaulement (75₁), la partie la plus petite (75₂) est ajustée dans l'orifice central (72₁) du noyau de stator (72) en ajustement à force de sorte que l'épaulement (75₁) est en contact étroit avec une surface latérale du noyau de stator (72).

3. Structure de montage d'un générateur destinée au montage d'un générateur (45) sur un moteur à combustion (E) selon la revendication 1, dans laquelle une portée (41) est ajustée à force dans un orifice de portée (32₃) en continuité avec l'orifice de support de vilebrequin (32₂), et une extrémité du vilebrequin (42) est ajustée à force dans une bague intérieure de la portée (41).
